# EUROPEAN PATENT SPECIFICATION

(11) **EP 2 852 961 B1**
(45) Date of publication and mention of the grant of the patent: **13.07.2016**
(21) Application number: 13722153.7
(22) Date of filing: 02.04.2013
(51) Int. Cl.: H01H 71/12, H01H 71/28, H01H 71/40, H01H 83/22

(54) **ELECTRIC CIRCUIT OVERLOAD PROTECTING DEVICE WITH INTEGRATED ELECTRICITY CONSUMPTION METER**
ÜBERLASTSCHUTZVORRICHTUNG EINES SCHALTKREISES MIT EINGEBAUTEM STROMZÄHLER
DISPOSITIF DE PROTECTION CONTRE LES SURCHARGES DANS UN CIRCUIT AVEC UN COMPTEUR D'ÉNERGIE ÉLECTRIQUE INTEGRÉ

(30) Priority: 22.05.2012 SI 201200156
(43) Date of publication of application: 01.04.2015
(73) Proprietor: NELA Razvojni centar za elektroindustrijo in elektroniko d.o.o., 4228 Zelezniki (SI)
(72) Inventor: JANC, Domen, SI-1410 Zagorje ob Savi (SI); STREHAR, Matija, SI-1251 Moravce (SI); KOPRIVSEK, Mitja, SI-1411 Izlake (SI)
(74) Representative: Borstar, Dusan
(86) International application number: PCT/SI2013/000018
(87) International publication number: WO 2013/176629

(56) References cited:
- EP-A1- 1 495 477
- EP-A1- 1 614 203
- EP-A1- 2 249 368
- WO-A1-2011/025345
- DE-A1- 10 120 189
- DE-A1- 19 721 591
- FR-A1- 2 812 965
- US-A- 5 323 288
- US-A1- 2003 235 021

## Description

The present invention belongs to electricity, particularly to basic electric elements, namely to electric switches and details of protective switches, which are actuated by means of a combination of an electro-thermal and magnetic mechanism and controlled by means of appropriate lever. On the other hand, such invention can also belong to physics, namely to measuring of electric variables, in particular of electric power or energy.

The purpose of the invention is to create a switch, which should upon integration into each disposable electric circuit on the one hand assure protection of the electric circuit against electric overload, and on the other hand also enable measuring of consumption of the electric energy or power by each load, and in addition to that, such switch, should be similarly the majority of known switches suitable for mounting into a standardized casing, which is adjusted for attachment on a standardized rail in usual electric switchboards.

The aim of the invention is therefore either to further improve an existing switch for protecting electric circuits against overloading in order to enable measuring of electricity consumption, or vice versa, to improve an electricity consumption meter, which should also ensure corresponding protection of the electric circuit against overloading.

In the context of the aforementioned problem, the overload protection means protection of an electric circuit at least against a short-circuit current, against a durable excessive current and/or against excessive voltage strokes, as well as against the so-called differential current, namely a difference between the current in a phase conductor and the neutral conductor, which may occur in the case of irregularities within the circuit.

A casing, into which the previously mentioned switch is to be mounted, is designed e.g. in accordance with the standard IEC 60898, and is adapted for mounting onto a standardized rail, which is available in appropriate switchboard, wherein the width of such casing is usually 18 mm, or optionally a double or triple value of said dimension.

A switch is described in DE 36 37 275 A1, which is suitable for protection against current overloads i.e. against excessive current. Such switch comprises an electromagnetic core, which is inserted within a tubular casing and furnished with a central passage, through which a triggering needle is inserted, which is axially displaceable along said core and protrudes towards the interrupting member, which is capable either to maintain each electric circuit established, or to promptly and reliably interrupt the circuit, when the end portion of said triggering needle abuts said member. Said casing is wrapped with an electrically conductive wire, which forms an electric winding i.e. a coil. In addition to said coil, an electromagnetic yoke is also foreseen on the external surface of the casing, and the coil is surrounded by said yoke. The triggering needle is furnished with a thicker portion, which is located apart from said core, wherein said core is located on the one side of said thicker portion, and the electromagnetic anchor is located on the opposite side of said thicker portion. Between the last and the core there is a compression spring, by which the triggering needle is surrounded. The triggering needle is inserted through the core and also through said anchor, but the anchor is fixed on the needle and cannot be axially displaced along the needle. The triggering needle extends through said anchor and protrudes towards a bimetallic membrane, which is at the room temperature located apart from the corresponding end portion of the triggering needle and is moreover deflected away from said anchor and said core, but by increasing of temperature it becomes deflected in the opposite direction i.e. towards the anchor and the core, and is moreover rest on the corresponding end portion of the triggering needle protruding towards it.

When such switch is integrated within an electric circuit, one end portion of the triggering needle is located apart from said bimetallic membrane, and the other end portion of said needle is located apart from the interrupting member, so that the electric circuit is established. When a short-circuit current is generated within the circuit, the excessive current generates a magnetic field, by which the anchor is displaced towards the core and the interrupting member, by which it abuts the thicker portion of the triggering needle and pushes the needle towards the interrupting member, by which the electric circuit is interrupted.

When a durable excessive current or voltage occurs, heat is generated within electric conductors, and due to such released heat the bimetallic membrane is then deflected towards the triggering needle, which is axially displaced towards the interrupting member, by which the circuit is interrupted. In this, the spring between the anchor and the core is compressed. As soon as said current overload is eliminated, the temperature in the area of said bimetallic membrane is decreasing, and said membrane is deflected back to its initial position, while the spring pushes the anchor and the triggering needle beck to their initial positions apart from the membrane, by which said interrupting member is capable to re-establish the electric circuit and regular operation thereof.

On the other hand, numerous appliances are also known in the prior art, which enable measuring of electric energy or electric power consumption.

An electric energy consumption meter is described in EP 2 154 539, which is furnished with a magnetic field detector. Such device comprises a measuring circuit as well as an calculating circuit, which are both energized via a feeding unit, by which a detecting coil is cooperating, which is capable to detect a magnetic field, which is generated due to said feeding unit. Said detecting coil is namely located closely to the inductive member, in particular a transformer in said feeding unit. Said magnetic field detector is capable to detect any changes of the electric signal received from said coil, which is then via a control circuit transmitted to said measuring circuit and calculating circuit. Such device enables measuring of energy consumption, but not also protecting of the electric circuit, in which it is integrated, against the electric overloads.

Still further, an electricity consumption meter is known from WO/2011/025345 A1 i.e. PCT/LT2011/000001, and is suitable for use in one-phase or three-phase electric circuits and is intended to detect illegal electricity consumers. Such apparatus is relatively complex and consists of numerous components, which are electrically interconnected with each other, namely of a voltmeter, transformers with two primary windings, an automatic switch, a bridge, a capacitor as well as of an electro-mechanic actuator, which shall in accordance with the previously mentioned source serve for cooperation with components for protection against at least certain electric overloads, namely against the excessive current or voltage and against the short-circuit current. However, the protecting components as such are neither described nor presented in the drawings, and can therefore only be anticipated, that known and commercially available appliances or components for protecting the circuit against each particular overloads or irregularities are used to this aim. It is also stated that this known device can be integrated into its own casing, which could by person skilled in the art also be anticipated as a standardized casing.

If therefore an user would like to efficiently protect an electric circuit by means of the appliance according to DE 36 37 275 A1, and to measure simultaneously the electricity consumption with the appliance according to WO/2011/025345 A1. bot appliances would have on the one hand be integrated within the same electric circuit, and on the other hand each of them, within its separate casing, would have to be mounted into each disposable electric switchboard. Both appliances are namely each per se much too complex to be integrated into a single casing, which could also meet the previously mentioned requirements. Such approach is therefore inappropriate both in view of costs and also in view of the required space within the electric switchboard.

Moreover an electric circuit breaker is disclosed in EP 1 614 203 A1, a circuit breaker having fault-current cutoff is disclosed in EP 1 495 477 A1, an electric switching device for fault current, overcurrent and short-circuit current protection is disclosed in US 2003/235021 A1, and a protecting apparatus with electromagnetic activation is disclosed in DE 101 20 189.

The present invention refers to an electric circuit overload protecting device according to claim 1.

The invention will be described in more detail by means of two embodiments of an electric circuit overload protecting device with integrated electricity consumption meter, which are presented in the attached drawings, wherein
- Fig. 1: is the first embodiment during regular functioning of an electric circuit with simultaneously measuring of electricity consumption;
- Fig. 2: is the embodiment according to Fig. 1 upon a current difference has occurred in the circuit, wherein the device according to the invention with integrated electricity consumption meter is capable to protect the circuit against overload;
- Fig. 3: is a further embodiment during regular functioning of an electric circuit with simultaneously measuring of electricity consumption; and
- Fig. 4: is the embodiment according to Fig. 3 upon a current difference has occurred in the circuit, wherein the device according to the invention with integrated electricity consumption meter is capable to protect the circuit against overload.

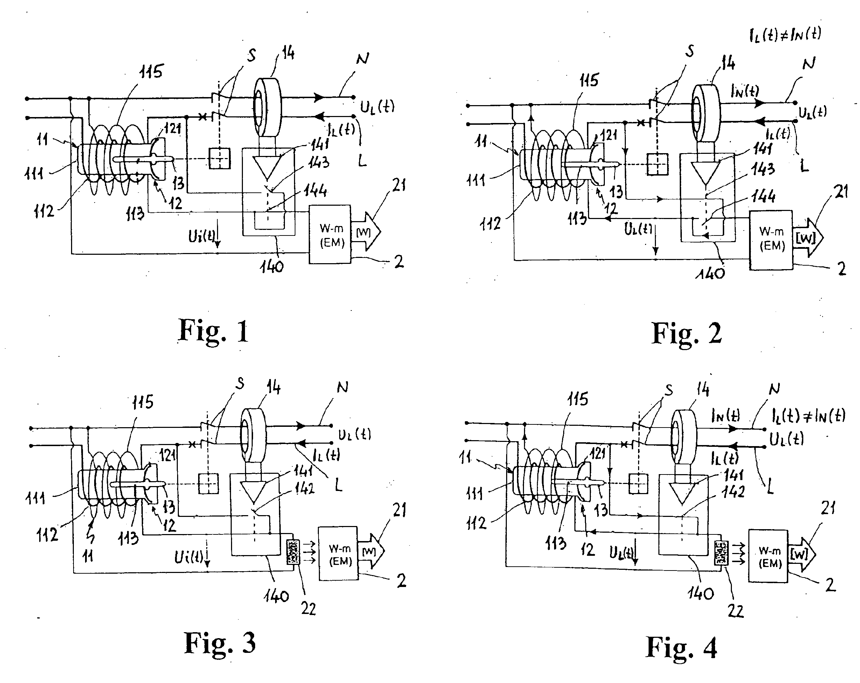

An electric circuit is schematically presented in Figs 1 - 4 and includes an electric load, which is not separately shown in the drawings. Such electric circuit is essentially formed of an active pole with a phase conductor L and a neutral pole with a neutral conductor N, as well as of a switch S, which is intended to interrupt said circuit either manually by each user or automatically in accordance with each predetermined conditions.

In order to protect said circuit against electric overloading, an actuating mechanism is integrated within said circuit in addition to said switch S, and comprises an induction unit 11, a thermal interrupter 12 and a triggering needle 13 which is adapted for cooperation with said switch S. Whenever an electric overload occurs, the actuating mechanism is capable to react by means of shifting said triggering needle 13 towards the switch S, by which the electric circuit is promptly interrupted.

Said induction unit 11 consists of a casing 111, a coil 112 which is electrically integrated within said circuit and is in the shown embodiment conceived as a part of the phase conductor L, as well as of an anchor 113 which is mechanically interconnected with said triggering needle 13. Whenever a short-circuit current occurs within such circuit, adequate magnetic field is induced within the coil 112, by which the anchor is displaced the relative to the casing 111 and the actuating needle 13 is moved towards the switch S in order to interrupt the circuit.

Said thermal interrupter 12 is located closely to said induction unit 11 and in thermal conductive relationship therewith, and is moreover furnished with a bimetallic membrane 121, which is mechanically interconnected with the actuating needle 13. Whenever an excessive current i.e. an over-current occurs within the circuit, adequate heat is generated in the area of said coil 112, by which the shape of said bimetallic membrane 121 is changed, which results in displacement of the triggering needle 13 towards the switch S and interruption of the circuit.

Whenever the circuit shall be protected against the differential circuit, i.e. against a false current due to difference between the current within the phase conductor L and the neutral conductor N, a differential transformer 14 should also be integrated within said circuit in addition to said induction unit 11 and thermal interrupter 12 in order to interrupt the circuit via appropriate electronic circuit 140 on the basis of a pre-set threshold.

The invention provides that the induction unit 11 in addition to said first coil 112 also includes a second coil 115, which is electrically insulated with regard to the first coil 112 and by means of which an electricity consumption meter 2 (in Figs 1 - 4 also marked with abbreviation EM) is integrated within said electric circuit, which is optionally availably as an electric power consumption meter (in Figs 1 - 4 also marked with abbreviation W-m) and which comprises an output unit 21 in form of a display and/or emitter or any other electric component or circuit suitable either for displaying and/or transmission and/or notification and/or storage of data related to electric energy and/or power consumption.

Said primary coil 112 is functioning as a primary winding and is integrated in the phase conductor L, while the secondary coil 115 is located closely to said primary coil 112 and is preferably placed around a plastic cartridge surrounding said primary coil 112, and is therefore functioning as a secondary winding integrated within the neutral conductor N, wherein thanks to such concept said secondary coil 115 is actually used as a sensor for detecting of each current intensity in the phase conductor L.

Said secondary coil 115 is via the electronic circuit 140 connected with the electricity consumption meter 2, which is on the other hand electrically connected to the neutral conductor N. Said electronic circuit 140 comprises a switch 142, 144 for disconnecting said consumption meter 2. When also said differential transformer 14 (Fig. 1 and 2) is integrated within the electric circuit, said electronic circuit 140, in addition to said switch 144, also comprises a switch 143 for switching-on the voltage U_{L} in the case of different current, wherein in such case the switches 143 and 144 should operate in a synchronized manner.

When such electric circuit (Fig. 1) together with the primary coil 112 of the induction unit 11 is supplied with alternative electric current I_{L}, alternative voltage Uᵢ is induced within said coil 112 due to alternatively changing magnetic field, the value of which is in linear relationship with the alternative current I_{L} in the phase conductor L and the primary coil 112 and may therefore be used for the purposes of measuring of current intensity, or by means of multiplying the current and voltage also for measuring of electric power consumption, In such case, the current IL is available within each electric load due to the voltage U_{L} between the phase conductor L with integrated primary coil 112 and the neutral conductor N. Another voltage Uᵢ is induced within the secondary coil 115, and this second coil 115 via the activated i.e. connected switch 144 is electrically interconnected with the consumption meter 2, which is further connected to the neutral conductor N. As mentioned, operation of said switches 134, 144 is synchronized and switches 143, 144 operate alternatively, so that the other switch 143 of the interrupting circuit 140 towards the differential transformer 14 is deactivated i.e. disconnected.

The consumption meter 2, namely an electric power consumption meter according to Fig. 2, is protected by means of synchronized electronically controlled and alternatively operating output switches 143 and 144. Whenever a differential current occurs within such electric circuit, namely a difference between the current I_{L} in the phase conductor L and the current I_{N} in the neutral conductor N, such difference is detected by the differential transformer 14, upon which the actuator 141 operating on the basis of a pre-set threshold triggers activation i.e. connection of the electronically controlled switch 143, by which the voltage U_{L} is transferred to the secondary coil 115, but simultaneously deactivating i.e. disconnecting the electronically controlled switch 144 results in interruption of the electric connection between the consumption meter 2 and the induction unit 11 of the actuating mechanism 1.

A further embodiment of the switch with integrated consumption meter 2 according to the invention is shown in Fig. 3, wherein said consumption meter 2 is separated apart from the conductors N, L and the induction unit 11 by means of a galvanic separating unit 22. Consequently, said consumption meter 2 is prevented from being exposed directly to the nominal voltage U_{L} in the circuit. In such case the electronic circuit 140 san be essentially simplified and comprises just an actuator 141 operating on the basis of a pre-set threshold as well as an output switch 142, which is during the regular operation of the electric circuit deactivated, and is activated only when a short-circuit current occurs (Fig. 4).

When the current difference occurs, namely the difference between the electric current I_{L} in the phase conductor L and the current IN in the neutral conductor N, such difference is detected by the differential transformer 14, upon which the actuator 141 operating on the basis of a pre-set threshold activates the electronically controlled switch 142, by which the voltage U_{L} is transferred to the secondary coil 115, by which said galvanic separator is exposed to the voltage UL, but not also the consumption meter 2, which is by means of the last galvanically separated there-from.

## Claims

1. Electric circuit overload protecting device with integrated electricity consumption meter (2), wherein such device is suitable for integrating into an alternative electric circuit, which in addition to at least one load or user comprises an active pole with a phase conductor (L) and a neutral pole with a neutral conductor (N), with a voltage (UL) between the phase conductor (L) and the neutral conductor (N), as well as at least one switch (S) which is suitable for interrupting of said circuit either manually or automatically, depending on each pre-determined conditions, and wherein said device, in addition to said switch (S), further comprises an actuating mechanism consisting of an induction unit (11), which is capable for protecting said circuit against the short-circuit current, of a thermal interrupter (12), which is suitable for protecting the circuit against the excessive current, as well as of a triggering needle (13), which is suitable for cooperating with said switch (S) for the purposes of interrupting said circuit, and wherein such device is furnished with a differential transformer (14), which is suitable for detecting a difference between the current in the phase conductor (L) and the current in the neutral conductor (N),
wherein said induction unit (11) comprises a casing (111), a primary coil (112) which is electrically connected within said circuit and substantially represents a part of the phase conductor (L), as well as an anchor (113), which is mechanically interconnected with said actuating needle (13),
and wherein said thermal interrupter (12) is placed closely to said induction unit (11) and in thermal conductive relationship therewith, and comprises a bimetallic membrane (114), which is mechanically interconnected with said triggering needle (13), so that the shape of said membrane (114) is changed by means of the heat generated by the excessive current in the circuit, by which the triggering needle (13) is displaced towards the switch (S) for the purposes of interrupting the electric circuit,
and wherein the differential transformer (14) is capable to interrupt the electric circuit by means of an electronically controlled switch (142; 143) and an actuator (141) operating on the basis of a pre-set threshold, when a current difference occurs in the electronic circuit (140);
so that the actuating mechanism is generally capable to react on various electric overloads by displacing said triggering needle (13) towards said switch (S), by which the electric circuit is then interrupted,
and wherein said induction unit (11) of the actuating mechanism, in addition to said primary coil (112) which is integrated in the phase conductor (L), also comprises a secondary coil (115), which is electrically connected with the neutral conductor (N) and electrically insulated with respect to said primary coil (112), preferably wound around i.e. over a plastic cartridge, which is placed around the primary coil (112), and is for the purposes of functioning as a sensor for detecting of each current intensity within the phase conductor (L) located closely to said primary coil (112),
and wherein said device also comprises an electric energy or power consumption meter (2), which is electrically connected with the secondary coil (115) and is together with the last connected to the neutral conductor (N),
wherein either
the consumption meter (2) is via an electronic interrupting circuit (140) electrically interconnected with the secondary coil (115), and is at the same time galvanically separated there-from,
wherein the secondary coil (115) is via the electronic interrupting circuit (140) electrically connected with a galvanic separating element (22), which is suitable for separation of the consumption meter (2) and by which said consumption meter (2) is to be separated apart from the conductors (N, L). and wherein said electronic interrupting circuit (140) comprises an actuator (141) operating on the basis of a pre-set threshold as well as an electronically controlled output switch (142), by which the voltage (UL) is transferred to the secondary coil (115), and which is open i.e. deactivated during regular operation of the electric circuit, namely before anyone of electric overloads has occurred,
or
the consumption meter (2) is via an electronic interrupting circuit (140) electrically interconnected with the secondary coil (115), and
wherein said interrupting circuit (140) comprises
- an actuator (141) operating on the basis of a pre-set threshold the output value of the differential transformer (14),
- an electronically controlled output switch (143) for switching-on the voltage (U_{L}), by which the voltage (UL) is transferred to the secondary coil (115), in the case of different current
- an electronically controlled switch (144), which is suitable for interrupting the electric circuit throughout the consumption meter (2),
wherein said output switches (143, 144) are synchronized with each other and are adapted to operate alternatively and depending on output values on differential transformer (14), so that by activating the first switch (143) the second switch (144) is automatically deactivated, or vice versa.

## Patentansprüche

1. Überlastungsschutzvorrichtung eines elektrischen Schaltkreises mit eingebautem Stromzähler (2), wobei sich eine solche Vorrichtung dazu eignet, in einen Wechselstrom-Schaltkreis integriert zu werden, der zusätzlich zu mindestens einer Last oder einem Benutzer einen aktiven Pol mit einem Phasenleiter (L) und einen neutralen Pol mit einem Neutralleiter (N) aufweist, mit einer Spannung (UL) zwischen dem Phasenleiter (L) und dem Neutralleiter (N),
sowie mindestens einen Schalter (S), der geeignet ist, den Schaltkreis entweder manuell oder automatisch zu unterbrechen, in Abhängigkeit von jeweils vorbestimmten Bedingungen, und wobei die Vorrichtung zusätzlich zu dem Schalter (S) darüber hinaus einen Betätigungsmechanismus aufweist, der aus einer Induktionseinheit (11), die in der Lage ist, den Schaltkreis vor Kurzschlussstrom zu schützen, einem thermischen Unterbrecher (12), der geeignet ist, den Schaltkreis vor übermäßigem Strom zu schützen, sowie einer Auslösenadel (13) besteht, die geeignet ist, mit dem Schalter (S) zum Zwecke der Unterbrechung des Schaltkreises zusammenzuwirken, und wobei eine solche Vorrichtung mit einem Differenzialtransformator (14) ausgestattet ist, der geeignet ist, einen Unterschied zwischen dem Strom in dem Phasenleiter (L) und dem Strom in dem Neutralleiter (N) zu ermitteln,
wobei die Induktionseinheit (11) ein Gehäuse (111), eine Primärspule (112), die im Schaltkreis elektrisch verbunden ist und im Wesentlichen einen Teil des Phasenleiters (L) darstellt, sowie einen Anker (113) aufweist, der mit der Betätigungsnadel (13) mechanisch verbunden ist,
und wobei der thermische Unterbrecher (12) nahe an der Induktionseinheit (11) und in thermischer Leitverbindung damit platziert ist, und eine bimetallische Membran (114) aufweist, die mit der Auslösenadel (13) mechanisch verbunden ist, so dass die Form der Membran (114) durch die durch den übermäßigen Strom in dem Schaltkreis erzeugte Wärme geändert wird, wodurch die Auslösenadel (13) zum Schalter (S) zum Zwecke der Unterbrechung des elektrischen Schaltkreises verschoben wird,
und wobei der Differenzialtransformator (14) in der Lage ist, den elektrischen Schaltkreis mittels eines elektronisch gesteuerten Schalters (142; 143) und eines Betätigungselements (141) zu unterbrechen, das auf der Basis eines voreingestellten Schwellenwertes betrieben wird, wenn ein Stromunterschied in dem elektronischen Schaltkreis (140) auftritt;
so dass der Betätigungsmechanismus im Allgemeinen in der Lage ist, auf verschiedene elektrische Überlastungen durch Versetzen der Auslösenadel (13) in Richtung zum Schalter (S) zu reagieren, wodurch dann der elektrische Schaltkreis unterbrochen wird,
und wobei die Induktionseinheit (11) des Betätigungsmechanismus zusätzlich zur Primärspule (112), die in den Phasenleiter (L) integriert ist, auch eine Sekundärspule (115) aufweist, die elektrisch mit dem Neutralleiter (N) verbunden und bezüglich der Primärspule (112) elektrisch isoliert ist, vorzugsweise um, d. h. über eine Kunststoffpatrone gewickelt ist, welche um die Primärspule (112) herum platziert ist, und dazu dient, als ein Sensor zum Ermitteln jeder Stromstärke in dem Phasenleiter (L), der nahe an der Primärspule (112) platziert ist, zu fungieren,
und wobei die Vorrichtung auch einen Elektroenergie- oder Stromzähler (2) aufweist, der mit der Sekundärspule (115) elektrisch verbunden und zusammen mit letzterer an den Neutralleiter (N) angeschlossen ist,
wobei entweder der Stromzähler (2) über einen elektronischen Unterbrechungsschaltkreis (140) elektrisch mit der Sekundärspule (115) verbunden ist und gleichzeitig galvanisch davon getrennt ist,
wobei die Sekundärspule (115) über den elektronischen Unterbrechungsschaltkreis (140) mit einem galvanischen Trennelement (22) elektrisch verbunden ist, das zur Trennung des Stromzählers (2) geeignet ist, und durch das der Stromzähler (2) von den Leitern (N, L) getrennt werden soll, und wobei der elektronische Unterbrechungsschaltkreis (140) ein Betätigungselement (141), das auf der Basis eines voreingestellten Schwellenwertes betrieben wird, sowie einen elektronisch gesteuerten Ausgangschalter (142) aufweist, durch den die Spannung (UL) zur Sekundärspule (115) übertragen wird, und der offen ist, d. h. während des regulären Betriebs des elektrischen Schaltkreises deaktiviert ist, und zwar bevor irgendeine elektrische Überlastung stattgefunden hat,
oder
der Stromzähler (2) ist über einen elektronischen Unterbrechungsschaltkreis (140) elektrisch mit der Sekundärspule (115) verbunden, und wobei der Unterbrechungsschaltkreis (140) folgendes aufweist:
- ein Betätigungselement (141), das auf der Basis eines voreingestellten Schwellenwertes den Ausgangswert des Differenzialtransformators (14) betreibt,
- einen elektronisch gesteuerten Ausgangschalter (143) zum Anschalten der Spannung (U_{L}), wodurch die Spannung (UL) zur Sekundärspule (115) im Falle eines unterschiedlichen Stroms übertragen wird;
- einen elektronisch gesteuerten Schalter (144), der zum Unterbrechen des elektrischen Schaltkreises durch den gesamten Stromzähler (2) geeignet ist, wobei die Ausgangsschalter (143, 144) miteinander synchronisiert und ausgestaltet sind, um alternativ und in Abhängigkeit von Ausgangswerten am Differenzialtransformator (14) zu arbeiten, so dass durch Aktivieren des ersten Schalters (143) der zweite Schalter (144) automatisch deaktiviert wird, und umgekehrt.

## Revendications

1. Dispositif de protection contre les surcharges dans un circuit électrique avec un compteur intégré (2) de consommation d'électricité, dans lequel un tel dispositif est approprié à être intégré dans un circuit électrique alternatif qui, outre une charge ou un utilisateur, comprend un pôle actif avec un conducteur de phase (L) et un pôle neutre avec un conducteur de neutre (N), avec une tension (UL) entre le conducteur de phase (L) et le conducteur de neutre (N), ainsi qu'au moins un commutateur (S) qui est approprié à une interruption dudit circuit manuellement ou automatiquement, en fonction de chaque condition prédéterminée, et dans lequel ledit dispositif, outre ledit commutateur (S), comprend en outre un mécanisme d'actionnement consistant en une unité à induction (11), qui est apte à protéger ledit circuit contre le courant de court-circuit, un interrupteur thermique (12), qui est approprié à protéger le circuit contre le courant en excès, ainsi qu'une aiguille de déclenchement (13), qui est appropriée à coopérer avec ledit commutateur (S) aux fins d'interruption dudit circuit, et dans lequel un tel dispositif est équipé d'un transformateur différentiel (14), qui est approprié à détecter une différence entre le courant dans le conducteur de phase (L) et le courant dans le conducteur de neutre (N),
dans lequel ladite unité à induction (11) comprend un boîtier (111), une bobine primaire (112) qui est électriquement connectée à l'intérieur dudit circuit et représente sensiblement une partie du conducteur de phase (L), ainsi qu'une ancre (113), qui est mécaniquement interconnectée avec ladite aiguille de déclenchement (13),
et dans lequel ledit interrupteur thermique (12) est placé à proximité de ladite unité à induction (11) et en relation de conduction thermique avec celle-ci, et comprend une membrane bimétallique (114), qui est mécaniquement interconnectée avec ladite aiguille de déclenchement (13), de telle sorte que la forme de ladite membrane (114) est changée au moyen de la chaleur générée par le courant en excès dans le circuit, d'où il résulte que l'aiguille de déclenchement (13) est déplacée vers le commutateur (S) aux fins d'interruption du circuit électrique,
et dans lequel le transformateur différentiel (14) est apte à interrompre le circuit électrique au moyen d'un interrupteur (142 ; 143) à commande électronique et d'un actionneur (141) fonctionnant sur la base d'un seuil prédéfini, lorsqu'une différence de courant survient dans le circuit électronique (140) ;
de telle sorte que le mécanisme d'actionnement est de façon générale apte à réagir à diverses surcharges électriques en déplaçant ladite aiguille de déclenchement (13) vers ledit commutateur (S), par lequel le circuit électrique est alors interrompu,
et dans lequel ladite unité à induction (11) du mécanisme d'actionnement, outre ladite bobine primaire (112) qui est intégrée dans le conducteur de phase (L), comprend également une bobine secondaire (115), qui est électriquement connectée avec le conducteur de neutre (N) et électriquement isolée par rapport à ladite bobine primaire (112), préférablement enroulée autour d'une, à savoir par-dessus une, cartouche plastique, qui est placée autour de la bobine primaire (112), et sert aux fins de fonctionner comme un capteur pour détecter chaque intensité de courant à l'intérieur du conducteur de phase (L) situé à proximité de ladite bobine primaire (112),
et dans lequel ledit dispositif comprend également un compteur (2) de consommation d'énergie électrique ou de puissance, qui est électriquement connecté avec la bobine secondaire (115) et est avec cette dernière connecté au conducteur de neutre (N),
dans lequel soit
le compteur (2) de consommation est par l'intermédiaire d'un circuit électronique d'interruption (140) électriquement interconnecté avec la bobine secondaire (115), et est en même temps galvaniquement séparé de celle-ci, dans lequel la bobine secondaire (115) est par l'intermédiaire du circuit électronique d'interruption (140) électriquement connectée avec un élément de séparation galvanique (22), qui est approprié à une séparation du compteur (2) de consommation et par lequel ledit compteur (2) de consommation doit être séparé des conducteurs (N, L), et dans lequel ledit circuit électronique d'interruption (140) comprend un actionneur (141) fonctionnant sur la base d'un seuil prédéfini ainsi qu'un commutateur d'entrée (142) à commande électronique, par lequel la tension (UL) est transférée à la bobine secondaire (115), et qui est ouvert, à savoir désactivé, pendant un fonctionnement normal du circuit électrique, à savoir avant qu'une quelconque de surcharges électriques ne survienne,
soit
le compteur (2) de consommation est par l'intermédiaire d'un circuit électronique d'interruption (140) électriquement interconnecté avec la bobine secondaire (115), et dans lequel ledit circuit d'interruption (140) comprend
- un actionneur (141) fonctionnant sur la base d'un seuil prédéfini de la valeur de sortie du transformateur différentiel (14),
- un commutateur de sortie (143) à commande électronique pour commuter la tension (UL), par lequel la tension (UL) est transférée à la bobine secondaire (115), dans le cas de différents courants ;
- un commutateur (144) à commande électronique, qui est approprié à interrompre le circuit électrique dans le compteur (2) de consommation,
dans lequel lesdits commutateurs de sortie (143, 144) sont synchronisés l'un avec l'autre et sont adaptés à fonctionner de façon alternée et en fonction de valeurs de sortie sur le transformateur différentiel (14), de telle sorte qu'en activant le premier commutateur (143), le deuxième commutateur (144) est automatiquement désactivé, ou vice-versa.
